# DEMANDE DE BREVET EUROPEEN

(11) **EP 2 717 409 A1**
(43) Date de publication de la demande: **09.04.2014**
(21) Numéro de dépôt: 12187122.2
(22) Date de dépôt: 03.10.2012
(51) Int. Cl.: H02J 3/38

(54) **Régulation d'un module électronique adaptateur de tension**

(71) Demandeur: Belenos Clean Power Holding AG, 2502 Bienne (CH)
(72) Inventeur: Toth, Antoine, 2800 Delémont (CH); Leuppi, Yvan, 1463 Rovray (CH)
(74) Mandataire: Giraud, Eric

(57) **Abrégé**

L'invention concerne un module électrique pour adapter un premier signal d'un premier système a un second signal d'un second système comprenant :
- une source d'alimentation fournissant un premier signal, ce premier signal étant continu et présentant des ondulations,
- un module convertisseur agencé pour transformer la tension d'alimentation en un signal intermédiaire;
- un microcontrôleur pour commander et réguler le module convertisseur ;
- un module onduleur agencé pour fournir en sortie un signal compatible avec un second signal d'un second système.

## Description

L'invention concerne un module électrique pour adapter un premier signal d'un premier système à un second signal d'un second système comprenant :
- une entrée agencée pour qu'une source d'alimentation puisse y être connectée, ladite source d'alimentation fournissant un premier signal, ce premier signal étant un signal continu présentant des ondulations,
- un module convertisseur agencé pour transformer la tension d'alimentation en un signal intermédiaire composé d'une composante continue et d'une composante sinusoïdale redressée;
- un module onduleur agencé pour fournir en sortie un signal compatible avec un second signal d'un second système.

### ARRIERE PLAN TECHNOLOGIQUE

Il est connu des systèmes électriques dont le but est de rendre un signal compatible avec un réseau électrique. Un exemple de ces systèmes électriques comprend une alimentation électrique comme un panneau solaire fournissant un signal continu, la sortie de cette alimentation est connectée à un module convertisseur fournissant un signal comprenant une composante continue et une composante sinusoïdale. Ce signal est envoyé à un module onduleur qui va transformer ce signal en un signal compatible avec le réseau, en l'occurrence un signal sinusoïdal.

Dans les systèmes actuels, un dispositif de découplage est installé entre l'alimentation électrique et le module convertisseur. Ce moyen de découplage qui peut être un condensateur de forte valeur. Ce moyen de découplage permet d'empêcher des signaux parasites venant du module convertisseur ou du module onduleur de se propager dans l'alimentation.

Or, ces condensateurs de forte valeur ont l'inconvénient d'être imposants et coûteux. En effet, les condensateurs ont leur prix et leur taille qui varient selon la valeur et la technologie utilisé. Pour des condensateurs de découplage, une valeur de 100µF est une valeur courante. Cette valeur implique une technologie de condensateur spécifique ainsi qu'une taille de condensateur, cette dernière étant liée à la valeur dudit condensateur. Pour des condensateurs de découplage, on utilisera des condensateurs électrolytiques.

### RESUME DE L'INVENTION

L'invention a pour but de pallier les inconvénients de l'art antérieur en proposant de fournir un système électronique adaptant mieux le premier signal au second signal.

A cet effet, l'invention concerne un module électrique pour adapter un premier signal d'un premier système à un second signal d'un second système comprenant :
- une source d'alimentation fournissant un premier signal, ce premier signal étant continu et présentant une ondulation,
- un module convertisseur agencé pour transformer la tension d'alimentation en un signal intermédiaire;
- un microcontrôleur pour commander et réguler le module convertisseur ;
- un module onduleur agencé pour fournir en sortie un signal compatible avec un second signal d'un second système,
**caractérisé en ce que** le microcontrôleur est agencé pour que la régulation du module convertisseur soit synchrone au second signal.

Dans un premier mode de réalisation avantageux, ledit module onduleur comprend un pont en H.

Dans un second mode de réalisation avantageux, il comprend en outre un microcontrôleur permettant de contrôler ledit module convertisseur.

Dans un troisième mode de réalisation avantageux, le module convertisseur comprend au moins un bloc régulateur comprenant un transformateur connecté en série avec des moyens de commutation, lesdits moyens de commutation étant commandés par ledit microcontrôleur.

Dans un premier mode de réalisation avantageux, ledit module convertisseur comprend au moins deux blocs régulateurs connectés en parallèle, les blocs régulateurs étant commandé par modulation de largeur d'impulsion.

L'invention concerne également un procédé de fonctionnement d'un module électrique pour adapter un premier signal d'un premier système à un second signal d'un second système, ledit module comprenant
- une source d'alimentation fournissant un premier signal, ce premier signal étant continu présentant des ondulations,
- un module convertisseur agencé pour transformer la tension d'alimentation en un signal intermédiaire;
- un microcontrôleur pour commander et réguler le module convertisseur ;
- un module onduleur agencé pour fournir en sortie un signal compatible avec un second signal d'un second système,
**caractérisé en ce que** le procédé comprend une étape de régulation visant à réguler la puissance délivrée par l'alimentation à travers le premier signal, ladite étape consistant à réaliser des mesures de puissances de manière synchrone au second système.

Dans une premier mode de réalisation avantageux, l'étape de régulation consiste à :
a) réaliser, durant une ondulation du premier signal, des mesures de puissances à intervalle régulier ;
b) faire la moyenne et sauvegarder cette valeur dans une première zone mémoire
c) comparer cette moyenne avec la moyenne des mesures de puissance réalisés lors d'une ondulation précédentes et sauvegardée dans un seconde zone mémoire :
   - si la valeur de la première zone mémoire est supérieure à celle de la seconde zone mémoire, envoyer une commande d'augmentation de la consigne de la tension ou du courant du premier signal dans le but d'augmenter la puissance ;
   - si la valeur de la première zone mémoire est inférieure à celle de la seconde zone mémoire, envoyer une commande de diminution de la consigne de la tension ou du courant du premier signal dans le but d'augmenter la puissance;
   - sinon faire varier la consigne de la tension ou du courant du premier signal et recommencer à l'étape a)
d) recommencer à l'étape a)

Dans une second mode de réalisation avantageux, l'étape de régulation consiste à :
A) réaliser, durant une ondulation du premier signal, des mesures de puissance instantanée à intervalle régulier ;
B) analyser ces mesures de puissance instantanée,
   - si la puissance instantanée passe par un maximum, sauvegarder dans une première zone mémoire et réaliser une étape d'amélioration.
   - sinon augmenter la puissance délivrée par l'alimentation à travers le premier signal en augmentant la consigne de la tension ou du courant.
C) recommencer à l'étape A).

Dans une troisième mode de réalisation avantageux, l'étape d'amélioration consiste à modifier la consigne de tension ou de courant de sorte que le maximum de puissance soit atteint au milieu de l'ondulation ou au moment qui donne le maximum de puissance moyenne.

### BREVE DESCRIPTION DES FIGURES

Les buts, avantages et caractéristiques du module électronique et du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement le module électronique selon l'invention

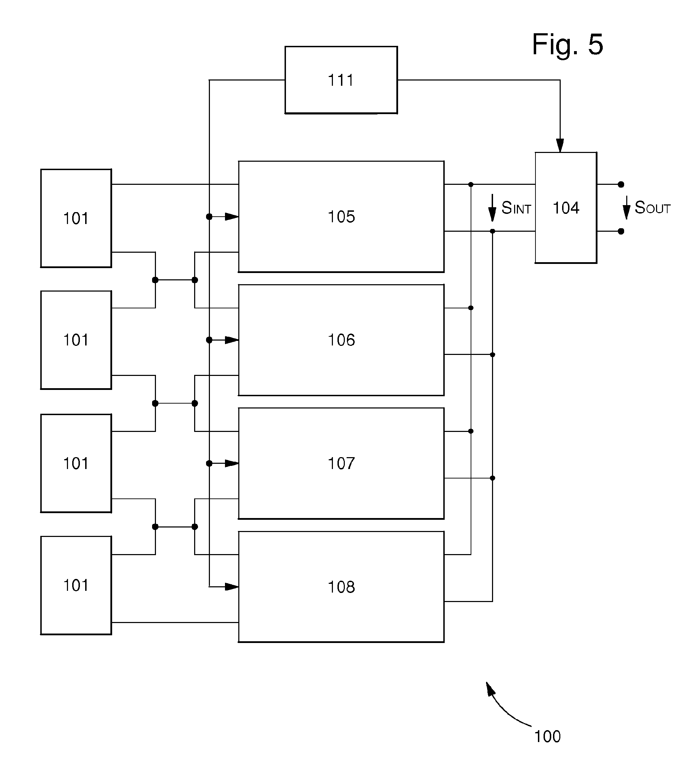

- Les figures 2 et 5 représentent schématiquement chacune une variante de l'invention; et
- Les figures 3 et 4 représentent schématiquement des diagrammes de tensions du module électronique d'un premier et d'un second mode de réalisation de l'invention.

### DESCRIPTION DETAILLEE

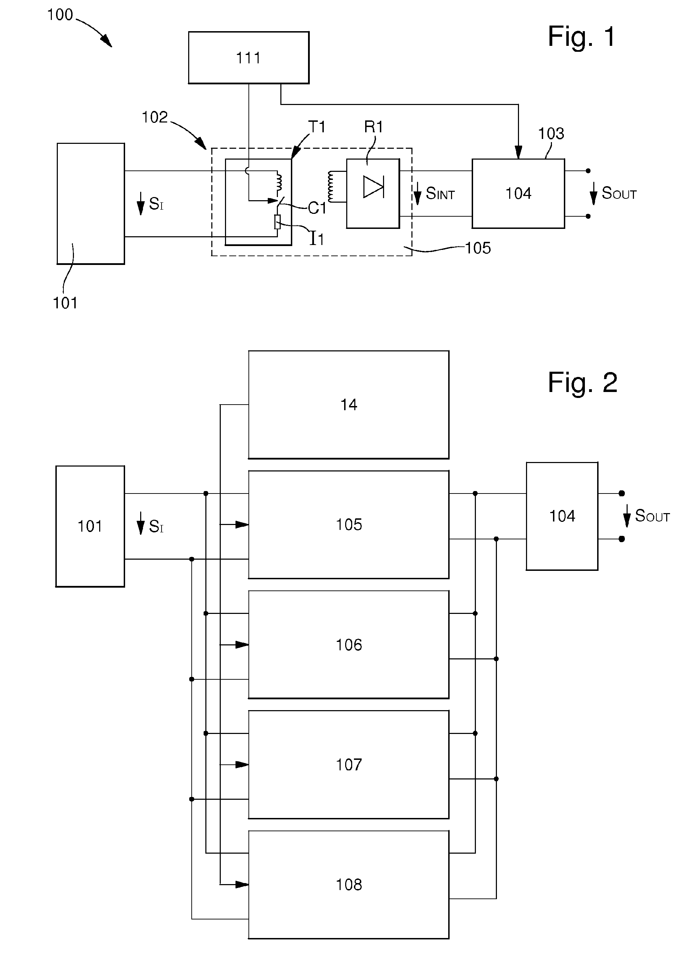

Sur la figure 1, un système électronique selon l'invention est représenté. Le système électronique est un module électrique pour adapter un premier signal S_{I} d'un premier système a un second signal Sₒᵤₜ d'un second système le premier système peut être une alimentation électrique fournissant une tension continue. Par exemple, cette alimentation électrique peut être un ou plusieurs panneaux solaires ou une ou plusieurs éoliennes ou une ou plusieurs batteries ou autres. Le second système est par exemple le réseau électrique domestique c'est-à-dire une tension sinusoïdale.

La tension continu en sortie de l'alimentation entre dans un module convertisseur 102. Ce module convertisseur comprend au moins un bloc régulateur 105. Dans une variante visible à la figure 2, il peut être prévu que le module convertisseur comprenne plusieurs bloc régulateur 106, 107 et 108 monté en parallèle.

Le bloc régulateur comprend un transformateur T1 en série avec des moyens de commutation C1. Le bloc régulateur 105 comprend en outre un moyen de mesure de courant I1 monté en série des moyens de commutations C1. Le transformateur T1, les moyens de commutation C1 et le moyen de mesure de courant I1 sont montés en parallèle du premier moyen de découplage 104. Le bloc régulateur 105 comprend également un redresseur R1 connecté en sortie du transformateur T1 pour fournir un signal intermédiaire. On comprend donc que le bloc régulateur 105 comprend son propre redresseur. Le module convertisseur comprend en outre un microcontrôleur 111. Ce microcontrôleur 111 est utilisé pour commander le bloc régulateur.

Dans le cas où le module convertisseur comprend plusieurs blocs régulateurs 105, 106, 107 et 108 en parallèle ou en série ou une combinaison parallèle et série, le microcontrôleur 111 commande chaque bloc régulateur 105, 106, 107 et 108 par modulation de largeur d'impulsion. Dans ce cas-là, le microcontrôleur 111 opère une seule commande pour tous les blocs régulateurs. Dans le cas où on a plusieurs alimentations électriques 101 en parallèle ou en série, la commande des blocs régulateurs peut être distincte pour chaque bloc ou ensemble de blocs.

Le signal intermédiaire Sint est envoyé à un module onduleur 103. Ce signal intermédiaire comprend une composante continue S_{R} c'est-à-dire un signal continu d'amplitude prédéfinie et une composante sinusoïdale S_{Q}. Cette composante sinusoïdale se présente sous la forme d'un signal en demi sinus ou sinus redressé, c'est à dire que les portions sinusoïdales sont toutes positives.

Le module onduleur 103 comprend un circuit de type pont en H 104. Ce type de circuit se présente sous la forme d'une pluralité de commutateurs disposé en H. on comprend alors que ledit pont en H comprend deux branches parallèles constituées chacune de deux commutateurs en série. Le pont en H alimente une charge qui se trouve être la branche centrale reliant les deux branches parallèles, cette branche centrale est connectée à chaque branche au niveau du point de connexion entre les deux commutateurs.

Le pont peut être commandé de manière à faire varier la polarité de la tension de charge de façon cyclique pour en faire un onduleur, le microcontrôleur 111 est agencé pour envoyer des signaux de commande aux commutateurs du pont en H et obtenir une fonction onduleur.

Avantageusement selon l'invention, l'alimentation et le module convertisseur sont directement reliés l'un à l'autre, aucun dispositif de n'est agencé pour empêcher la propagation des signaux produits par le module onduleur vers l'alimentation. On comprendra alors qu'un condensateur de très faible valeur peut être placé en parallèle de ladite alimentation. Cette caractéristique induit que le signal en sortie de l'alimentation est un signal continu présentant une ondulation.

Ce signal de sortie de l'alimentation se présente alors sous la forme d'un signal sinusoïdal redressé c'est-à-dire dont les alternances sont toutes positives. On constatera que le signal de sortie de l'alimentation présente une fréquence double de celle du second système. Par exemple, si le second système est le réseau fonctionnant au 50Hz, le signal de sortie de l'alimentation aura une fréquence de 100Hz. En effet, le signal du second système est sinusoïdal ce qui fait que ce signal présente, pour une période, une ondulation positive et une ondulation négative. Or, comme le signal de sortie présente une allure redressée, il ne présente que des ondulations positives. Par conséquent, la fréquence est multipliée.

Selon l'invention, un procédé pour gérer le fonctionnement du micro onduleur est utilisé pour s'adapter à cette caractéristique. Le procédé est alors configuré pour que la régulation et recherche du point de puissance maximum soit synchrone avec le signal de sortie du système électronique.

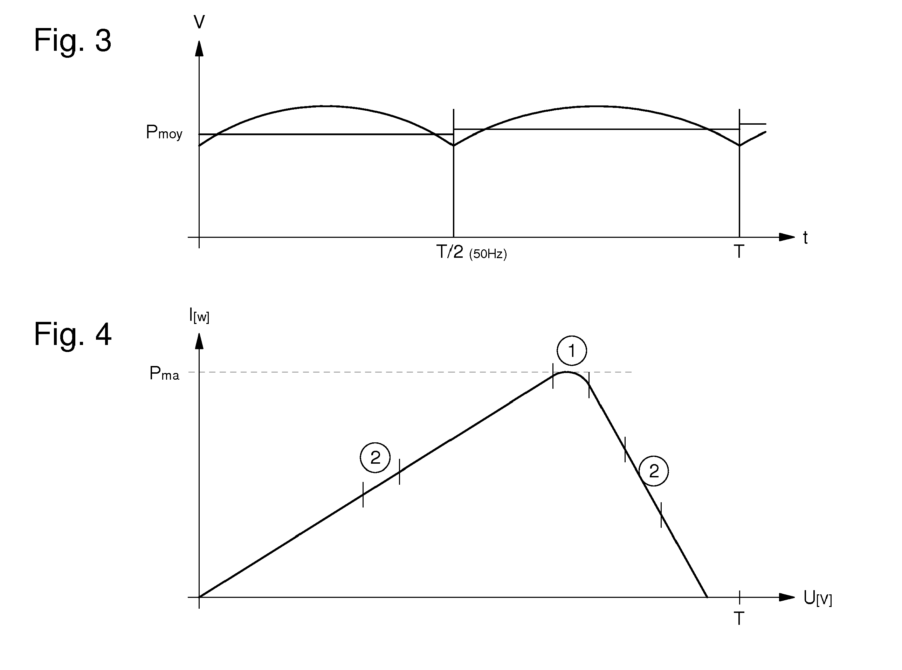

Selon un premier mode de réalisation visible à la figure 3, la recherche du point maximum de puissance Pma est configurée pour avoir une fréquence calquée sur celle du signal de sortie de l'alimentation. Pour cela, le module convertisseur et le microcontrôleur sont agencés pour, sur une alternance, faire une série de mesures de tension et de courant. Ces mesures de tension et de courant permettant alors de calculer une puissance et il est alors de possible de calculer la puissance moyenne. Cette valeur de puissance moyenne est conservée dans une première mémoire tampon.

Après la tout première ondulation, une variation de puissance est envoyée par le microcontrôleur 111. Cette consigne ou commande variation de puissance permet d'amorcer la régulation. Préférentiellement, une consigne d'augmentation de la puissance est envoyée. Cette augmentation de la puissance peut se faire par variation du courant ou de la tension de sortie de l'alimentation.

Puis, pour l'alternance suivante, les mêmes actions sont réalisées c'est-à-dire que des mesures de tensions et de courants sont faites et que la moyenne de puissance est calculée et placée dans une seconde mémoire tampon. Une fois cette moyenne calculée, la valeur mesurée et celle de la première alternance sont comparées.

Si la moyenne de la première alternance est inférieure à la moyenne de la seconde alternance, le microcontrôleur 111 comprend que la puissance maximale n'a pas été atteinte. De ce fait, le microcontrôleur va envoyer une commande ou consigne pour augmenter la puissance via le courant délivré par l'alimentation. La valeur de la première mémoire tampon sera effacée et la valeur de la deuxième mémoire tampon sera transférée dans la première mémoire tampon.

Lors de la prochaine alternance, des mesures de tension et de courant et donc de puissance seront également faites de sorte à calculer la valeur moyenne de la puissance. Cette valeur moyenne sera sauvegardé dans la seconde mémoire tampon et une étape de comparaison aura lieu.

Si la moyenne de la première alternance est supérieure à la moyenne de la seconde alternance, le microcontrôleur comprend que le courant délivré par l'alimentation est trop important et donc que le point de puissance maximale est dépassé. Le microcontrôleur va alors envoyer une consigne ayant pour but de diminuer le courant de sortie de l'alimentation. Une nouvelle série de mesures est réalisée pendant l'alternance suivante donnant lieux au calcul d'une moyenne. Cette moyenne sera comparée par rapport à celle de l'alternance précédente et ainsi de suite. Bien entendu, il est envisageable que la consigne de variation de puissance soit faite par variation de la tension.

Dans un deuxième mode de réalisation visible à la figure 4, la régulation du module convertisseur se fait sur une ondulation. Par conséquent, elle évolue en fonction du fonctionnement du système.

En effet, au démarrage du système soit dans les zones 2 de la figure 4, la puissance est nulle alors qu'une fois le système en régime stabilisé, la puissance délivrée est théoriquement constante. Néanmoins, la régulation se fait de la même façon.

Pour cela, on utilise le fait que le signal de sortie de l'alimentation soit ondulé. Cette variation de la tension implique une variation de la puissance instantanée, ce qui fait qu'à chaque ondulation, la puissance instantanée peut être mesurée.

Pendant la phase de démarrage, la consigne de puissance est d'augmenter la puissance fournie par l'alimentation. A chaque ondulation, on mesure la puissance instantanée à intervalle régulier. S'il est mesurée que la puissance ne fait qu'augmenter, le microcontrôleur en conclut que le point maximum de puissance n'est pas atteint et sauvegarde le point de puissance le plus élevé mesuré. La consigne d'augmenter la puissance par modification de la tension est donc conservé et appliqué à partir du point de puissance le plus élevé mesuré précédemment.

Lors d'une ondulation, s'il est mesuré que la puissance instantanée augmente puis diminue, c'est-à-dire la zone 1, cela signifie que le point maximum de puissance est atteint et dans ce cas-là, le microcontrôleur passe dans une phase de surveillance. Dans cette phase, la puissance instantanée de chaque ondulation est mesurée. Les mesures sont alors comparées à celles de l'ondulation précédente de sorte qu'aucune consigne d'augmentation ou de diminution de puissance ne soit envoyé si les variations de puissances sont faibles.

Il est envisageable qu'une étape visant à améliorer le signal de sortie de l'alimentation. En effet, le fait d'atteindre le point de puissance maximum ne signifie pas que le signal de sortie de l'alimentation est parfait. Il est possible que ce signal soit déséquilibré. Effectivement, la commande du signal de sortie de l'alimentation est réalisée de sorte que le point de puissance maximum soit atteint par deux fois. Or, ce point de puissance maximum peut être atteint en début et fin de l'ondulation ou au milieu de l'ondulation.

Par ailleurs, l'étape consistant à réaliser des mesures de puissance permet de connaitre la répartition de la puissance et donc de savoir où ce trouve les points de puissance maximum. Sachant cela, il devient plus aisé de modifier la commande du signal de sortie de l'alimentation pour obtenir un signal de sortie de l'alimentation dans lequel les points de puissance maximum sont placés idéalement.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Module électrique pour adapter un premier signal d'un premier système a un second signal d'un second système comprenant :
- une source d'alimentation fournissant un premier signal, ce premier signal étant continu et présentant une ondulation,
- un module convertisseur agencé pour transformer la tension d'alimentation en un signal intermédiaire;
- un microcontrôleur pour commander et réguler le module convertisseur ;
- un module onduleur agencé pour fournir en sortie un signal compatible avec un second signal d'un second système,
**caractérisé en ce que** le microcontrôleur est agencé pour que la régulation du module convertisseur soit synchrone au second signal.

2. Module électronique selon la revendication 1, **caractérisé en ce que** ledit module onduleur comprend un pont en H.

3. Module électronique selon les revendications 1 ou 2, **caractérisé en ce qu'il** comprend en outre un microcontrôleur permettant de contrôler ledit module convertisseur.

4. Module électronique selon une des revendications précédentes, **caractérisé en ce que** le module convertisseur comprend au moins un bloc régulateur comprenant un transformateur connecté en série avec des moyens de commutation, lesdits moyens de commutation étant commandé par ledit microcontrôleur.

5. Module électronique selon la revendication 4, **caractérisé en ce que** ledit module convertisseur comprend au moins deux blocs régulateurs connectés en parallèle, les blocs régulateurs étant commandé par modulation de largeur d'impulsion.

6. Procédé de fonctionnement d'un module électrique pour adapter un premier signal d'un premier système a un second signal d'un second système, ledit module comprenant
- une source d'alimentation fournissant un premier signal, ce premier signal étant sinusoïdal,
- un module convertisseur agencé pour transformer la tension d'alimentation en un signal intermédiaire;
- un microcontrôleur pour commander et réguler le module convertisseur ;
- un module onduleur agencé pour fournir en sortie un signal compatible avec un second signal d'un second système,
**caractérisé en ce que** le procédé comprend une étape de régulation visant à réguler la puissance délivrée par l'alimentation à travers le premier signal, ladite étape consistant à réaliser des mesures de puissances de manière synchrone au second système.

7. Procédé de fonctionnement selon la revendication 6, **caractérisé en ce que** l'étape de régulation consiste à :
a) réaliser, durant une ondulation du premier signal, des mesures de puissances à intervalle régulier ;
b) faire la moyenne et sauvegarder cette valeur dans une première zone mémoire
c) comparer cette moyenne avec la moyenne des mesures de puissance réalisés lors d'une ondulation précédentes et sauvegardée dans un seconde zone mémoire :
- si la valeur de la première zone mémoire est supérieure à celle de la seconde zone mémoire, envoyer une commande d'augmentation de la consigne de tension ou du courant du premier signal ;
- si la valeur de la première zone mémoire est inférieure à celle de la seconde zone mémoire, envoyer une commande de diminution de la consigne de tension ou du courant du premier signal ;
- sinon faire varier la consigne de tension ou du courant du premier signal et recommencer à l'étape a)
d) recommencer à l'étape a)

8. Procédé de fonctionnement selon la revendication 6, **caractérisé en ce que** l'étape de régulation consiste à :
A) réaliser, durant une ondulation du premier signal, des mesures de puissance instantanée à intervalle régulier ;
B) analyser ces mesures de puissance instantanée,
- si la puissance instantanée passe par un maximum, sauvegarder dans une première zone mémoire et réaliser une étape d'amélioration
- sinon augmenter la puissance délivrée par l'alimentation à travers le premier signal.
C) recommencer à l'étape A).

9. Procédé de fonctionnement selon la revendication 8, **caractérisé en ce que** l'étape d'amélioration consiste à modifier la consigne de tension ou de courant de sorte que le maximum de puissance soit atteint au moment qui donne le maximum de puissance moyenne.
